# EUROPEAN PATENT SPECIFICATION

(11) **EP 4 496 183 B1**
(45) Date of publication and mention of the grant of the patent: **10.09.2025**
(21) Application number: 23186698.9
(22) Date of filing: 20.07.2023
(51) Int. Cl.: H02K 1/18, H02K 7/14

(54) **ELECTRIC MACHINE**
ELEKTRISCHE MASCHINE
MACHINE ÉLECTRIQUE

(43) Date of publication of application: 22.01.2025
(73) Proprietor: MAHLE International GmbH, 70376 Stuttgart (DE)
(72) Inventor: CURK, Tomaz, 5270 Ajdovscina (SI); MASERA, Sebastjan, 5292 Rence (SI); PERESSUTTI, Tin, 1000 Ljubljana (SI); STRNISNIK, Andraz, 1222 Trojane (SI); ZAVODNIK, Vid, 1261 Ljubljana-Dobrunje (SI)
(74) Representative: BRP Renaud & Partner mbB Rechtsanwälte Patentanwälte Steuerberater

(56) References cited:
- JP-A- 2006 136 164
- US-A1- 2005 194 859
- US-A1- 2007 278 892
- US-A1- 2013 249 327

## Description

The present invention relates to an electric machine, in particular an electric motor for a fan, having a stator and a carrier to which the stator is fixed. The invention further relates to a method for manufacturing such an electric machine.

An electric machine has a stator and a rotor which interact electromagnetically during operation, so that the rotor rotates relative to the stator about an axis of rotation. For reliable operation, the rotor and stator have to be positioned relative to one another, in particular coaxially. Positioning is usually achieved by fixing the stator to a carrier. For this purpose, the stator is usually positioned accordingly relative to the carrier, attached to the carrier and then fixed to the carrier by means of screw connections.

Such an electric machine is known from WO 2019/002266 A1. The stator of the electric machine extends in a circumferential direction in a closed hollow-cylindrical manner. The carrier has a carrier plate, wherein the stator is attached to the carrier plate of the carrier using screw connections.

Further electric machines are known from US 10,965,175 B2 and

US 7,138,471 B2 and JP 2006 136164 A and US 2005/194859 A1.

The present invention is concerned with the problem of providing an improved or at least alternative embodiments for an electric machine of the type mentioned above and for a method for manufacturing such an electric machine.

This problem is solved according to the invention by the object of the independent claims. Advantageous embodiments are the subject of the dependent claims.

Accordingly, the present invention is based on the basic idea of positioning and fixing a stator of an electric machine to a carrier of the electric machine by means of press fit between stator pins fixed to the carrier and projecting the carrier. Thus, a reliable and stable as well as defined positioning and fixing of the stator within the electric machine is achieved. Moreover, in this way, no other separate connecting means, such as screws and the like, are necessary for fixing and positioning the stator to the carrier. Thus, the fixing and positioning of the stator to the carrier are preferably free of screw connections. The thus achieved simplified manufacture of the electric machine leads to a cost-effective as well as to a decrease in the cycle time in manufacturing the electric machine. The press fit between the respective pin and the stator further leads to a direct contact between the stator and the respective pin. This leads to a heat transfer from the stator to the respective pin and thereby to the carrier. Thus, a simplified and improved cooling of the stator is achieved.

According to the idea of the invention, the electric machine has a rotor and the stator. The rotor rotates in operation about an axis of rotation of the electric machine. The axis of rotation runs parallel, particularly coaxial with an axial direction of the electric machine. The axial direction of the electric machine is also referred to as motor axial direction in the following. The stator extends in a circumferential direction of the electric machine. The circumferential direction of the electric machine is also referred to as motor circumferential direction in the following. The carrier extends radially with respect to the motor axial direction. At least one pin is fixed to the carrier and projects axially from the carrier plate. The at least one pin is radially offset to the axis of rotation. The stator is axially pressed onto the at least one pin so that the stator is attached to the respective pin by means of a press fit, wherein the at least one press fit positions the stator relative to the carrier and fixes the stator to the carrier. The press fit to the axial pins further enable centering of stator to the carrier. This eliminates the requirement for additional tooling, devices or dedicated positioning features and the like for centring purposes.

Preferably the direct contact between the respective pin and the stator is thermally and electrically conductive. This leads to an improved heat transfer as well as said parts of the stator and the corresponding pin being electrically equipotential. Thus improved cooling as well as improved compensation of unwanted electromagnetic interference are achieved.

Particularly preferred are embodiments in which the stator as a whole is positioned and fixed to the carrier by means of the at least one press fit. Preferably, positioning and fixing are achieved exclusively by means of the press fit. Thus, the positioning and fixing of the stator in the electric machine is free of screw connections. This leads to a considerable simplification of the manufacture of the electric machine with a significant decrease in the cycle time in production.

The respective pin is conveniently electrically conductive, for example made of a metal or metallic alloy.

Cooling and electromagnetic compensation are more distinct and improved if the pins are each thermally and electrically connected to the carrier. Conveniently, the carrier is electrically conductive and electrically grounded.

The carrier can have ribs which project axially, for example. This improves thermal dissipation of the electric machine and in particular of the stator and thus leads to better cooling.

The stator conveniently has a laminated stack, also referred to as laminated core in the following. The laminated core has successive laminations along the axis of rotation and thus axially successive lamination. In particular, the laminated core consists of the axially successive lamination. The laminated core serves in particular to guide fields generated during operation of the electric machine for electromagnetic interaction. For this purpose, at least one winding/coil of the stator can be wound around the laminated core.

The stator extends in the motor circumferential direction, preferably closed, and further in the axial direction. The stator is thus shaped in the manner of a hollow cylinder.

The electric machine is advantageously designed as an electric motor.

The electric machine, in particular the electric motor, can be used in any application.

In particular, the electric machine may be part of a fan, with the rotor being connected to fan blades of the fan.

The electric machine may have one single pin.

Preferably the electric machine comprises at least two such pins wherein the pins are distanced to one other in the motor circumferential direction. For instance, the electric machine can have three pins. The pins preferably have the same radial distance to the axis of rotation. The pins preferably have the same circumferential distance to one other, that is distributed equally along the motor circumferential direction.

The rotor is beared so that it can rotate about the axis of rotation. The bearing can be mounted on the carrier, that is the rotor can be rotatably mounted on the carrier. For this purpose, an axially extending bolt can be fixed to the carrier and the rotor can be rotatably mounted on the bolt. The at least one pin is thus radially distanced to the bolt.

A method for manufacturing of the electric machine preferably includes providing a carrier assembly, a stator assembly and a rotor assembly. The carrier assembly comprises the carrier and the at least one pin fixed to the carrier. The stator assembly comprises the stator at least partially. The rotor assembly comprises the rotor at least partially. For manufacturing, the stator assembly is axially press fitted onto the at least one pin, such that the stator assembly is positioned and fixed to the carrier. In addition, the rotor assembly is ratably fixed to the carrier, in particular by using said bolt.

The respective pin can be fixed to the carrier in any way.

Preferably, the respective pin is overmolded with the carrier. The respective pin can be inserted as an insert in an injection mold and then the carrier can be produced by injection molding in such a way that the pins are fixed to the carrier and project axially from the carrier. That is, the carrier is manufactured by injection molding. Here, the at least one pin is inserted as an insert in an injection mold and then the carrier is manufactured by injection molding such that the at least one pin is fixed to the carrier and projects axially from the carrier.

The bolt may be fixed to the carrier like the at least one pin. That is, the bolt may be used as an insert in the injection mold and then the carrier manufactured by injection molding such that the bolt is fixed to the carrier and projects axially from the carrier.

The carrier is preferably electrically conductive. For example, the carrier may be made of a metal or metallic alloy, such as aluminium, in particular by injection molding.

In preferred embodiments, at least one of the at least one pins axially exceeds the stator on the side averted from the carrier with section of the pin. The section is also referred to below as extension section in the following. That is, at least one of the at least one pins has an extension section which axially extends the stator on the side averted from the carrier. At least one of the at least one extension sections is deformed after the stator has been pressed onto the at least one pin, so that the extension section axially presses the stator against the carrier. Preferably each of the pins comprises such an extension section and each extension section is deformed after the stator has been pressed onto the respective pin to axially press the stator against the carrier. This leads to a prevention or at least reduction of axial clearance between the stator and the respective pin. Hence, an additional fixing and thus fastening of the stator to the carrier is achieved by still using the at least one pin.

The deformation of the respective extension section conveniently includes enlarging the extension section radially.

Conveniently the deformation of the respective extension section is carried out after press fitting the stator onto the at least one pin and further preferably before attaching the rotor assembly.

In preferred embodiments, the press fit between the stator and the respective pin is a press fit between the laminated core and the respective pin. That is, the laminated core is used for positioning and fixing the state or to the carrier the respective pin.

In advantageous embodiments, the stator comprises an associated guide for the respective pin. The respective guide extends axially, wherein each guide is axially pressed onto the associated pin to form a press fit. This leads to a more simplified manufacture new more precise positioning and fixing of the state or to the carrier.

Preferably, the laminated core comprises the at least one guide.

According to advantageous embodiments, the lamination core has an associated guide for the respective pin, wherein the respective pin passes through the associated guide. The respective guide extends in an associated axial direction, which is also referred to below as guide axial direction. The respective guide has an associated opening in at least a part of the lamination, wherein the opening is also referred to below as lamination opening. Thus, the respective pin passes through the lamination openings of the associated guide. Here, the lamination core is axially pressed onto the at least one pin to position the stator relative to the carrier and fix the stator to the carrier fix, wherein the respective pin is in contact with the lamination core in an axial contact section of the pin.

In preferred embodiments, in the at least one of the contact sections, preferably in the respective contact section, at least a part of the lamination openings, preferably the respective lamination opening, has at least one tooth. The respective tooth projects radially inward with respect to the associated guide axial direction. The respective tooth extends in a guide circumferential direction of the associated guide over a segment, which is also referred to below as tooth segment, so that, in the associated lamination opening, a gap segment adjoining the tooth segment in the guide circumferential direction is free of teeth. The respective tooth is bent to form the press fit and contacts the associated pin due to the press fit. A clearance segment adjoining the respective tooth in the associated lamination opening in the guide circumferential direction of the associated guide is free of contact with the associated pin and thus distanced to the pin. The projecting teeth result in reliable thermal and electrical contact between the laminated core and the respective pin, so that heat is reliably transported away from the laminated core and thus from the stator via the pins, and the stator is thus reliably cooled. The reliable contact between the laminated core and the pins further results in the laminated core and the pins being electrically equipotential. As a result, there is improved compensation of unwanted electromagnetic interference. At the same time, the locally contact-free arrangement of the lamination to the respective pin and thus the clearance segments lead to a reduction in the forces required when pressing the laminated core onto the pins. As a result, on the one hand the risk of damage to the laminated core is at least reduced, and such damage is in particular avoided. Thus, the aforementioned contacts between the respective lamination and the associated pin are reliably established, as are the clearance sections, so that in turn there is improved cooling and electromagnetic compensation. On the other hand, the reduction of the required forces leads to a simplified and more precise manufacture of the electric machine leading to a further decrease in cycle time in manufacturing the electric machine.

As described above, the respective tooth is bent, when the pin is guided through the associated lamination opening. The teeth and the pins are thus dimensioned accordingly. Thus, the respective tooth is preloaded against the associated pin. On the one hand, this results in reliable contact between the respective tooth and the associated pin, so that thermal dissipation and electromagnetic compensation are implemented more reliably. At the same time, the clearance segments adjacent to the teeth lead to and allow an advantageous deformation of the teeth, so that the contact is improved and precise. On the other hand, reliable relative positioning of the laminated core and thus of the stator to the pins and consequently in the electric machine is thus possible without additional tooling, devices or dedicated positioning features.

The contact of the respective tooth with the associated pin means in the present case an at least substantially continuous contact. The contact can therefore be interrupted locally, for example due to radial recesses in a radial outer side in the contact section of the pin.

The motor axial direction and the guide axial directions are parallel to each other. Consequently, in the present case "axial" means along one of the axial directions.

The axial directions are spaced apart. Thus, "radial" refers in each case to the associated axial direction.

The respective circumferential direction is related to the associated axial direction, that is it revolves around the associated axial direction. This means that the motor circumferential direction is related to the motor axial direction and the respective guide circumferential direction is related to the associated guide axial direction.

The respective guide axial direction is conveniently coaxial with the associated pin. This means that the respective guide axial direction is suitably coaxial with an axis of the associated pin, in particular corresponds to the pin axis.

Preferably, at least one of the guides, preferably the respective guide, is formed in an associated radially projecting tongue of the laminated core, which is spaced apart from the at least one winding/coil of the stator. That is, the respective lamination opening is formed in a radially projecting tongue, in particular in an associated radially projecting tongue, of the associated lamination.

In preferred embodiments, axially successive teeth and gap segments are arranged offset from one another in the guide circumferential direction of the associated guide, so that in an axial plan view of the guide, the teeth of the laminations of the respective guide form a shoulder of the guide that is closed in the guide circumferential direction and projects radially inwards. The shoulder is thus closed in the top view in the guide circumferential direction of the associated guide. That is, the shoulder does not consist of tooth segments connected to each other in the circumferential direction. Such an arrangement of the teeth, and thus the shoulder, has the effect that the respective pin is connected to the laminated core correspondingly in the guide circumferential direction of the associated guide in each angular section. Thus, there is an improved thermal and electrical connection of the laminated core to the respective pin and consequently improved cooling and electromagnetic compensation.

Possible variants are those in which the contact section of at least one of the pins, preferably of the respective pin, has at least one projection which projects radially outwards from the pin with respect to the associated guide axial direction and extends axially. The respective projection is in contact in the contact section with at least two laminations of the associated guide. Thus, the contact between the respective pin and the laminated core is increased. The respective projection conveniently leads to a deformation of the associated laminations. As a result, increased and more reliable contact occurs, so that cooling and electromagnetic compensation are in turn improved.

By definition, the contact between the lamination and the respective projection takes place outside the clearance segments. This means that the respective projection either contacts the respective associated lamination in a tooth segment or interrupts a clearance segment.

The respective projection extends locally in the guide circumferential direction of the associated guide.

Preferably, at least one of the projections, preferably the respective projection, is formed as a radially projecting tip. This results in the respective lamination in contact with the tip being deformed by the tip in such a way that the tip holds and thus secures the lamination axially and about the associated guide circumferential direction. This leads to an increased and improved contact between the laminated core and the pin as well as to an improved and more stable positioning of the laminated core, in particular the stator, on the carrier.

At least one of the projections, in particular the respective projection, can be introduced into the contact section of the associated pin in a spanning manner, for example by means of scoring. This creates a radial recess in the contact section, which results in the projection, in particular the tip. The recess is conveniently spaced from the laminations and thus free of contact to the laminations.

It is possible that at least one of the pins, preferably the respective pin, has at least two such projections, which are spaced apart from one another in the associated guide circumferential direction. Here, at least one projection of the at least one pin can be in contact with a tooth and at least one projection in contact with the lamination outside the tooth segment of at least one of the laminations.

If at least one of the pins has at least one such projection, the associated laminations may each have a single such tooth in the lamination opening.

It is possible that the contact section of at least one of the pins, preferably of the respective pin, is smooth so that only the teeth are in contact with the pin in the contact section. In this variant, the respective gap segment is thus a clearance segment.

If at least one of the pins is smooth as explained, the associated laminations preferably have at least two teeth spaced apart from each other in the associated guide circumferential direction in the associated lamination openings.

The electric machine has a number N of such pins, where N is greater than or equal to two.

Preferably, the electric machine has three such pins, which are preferably arranged equidistantly to each other in the motor circumferential direction. Thus, with a simplified design and thus manufacture of the electric machine, there is a sufficiently high contact between the laminated core and the pins and consequently a sufficiently high cooling and electromagnetic compensation. In addition, the laminated core, preferably the stator, can be reliably and precisely positioned and fixed in this way relative to the carrier and thus in the electric machine.

If the lamination openings each have a single such tooth, the respective tooth segment is preferably 360°/N, that is the respective tooth extends over 360°/N in the associated guide circumferential direction. In addition, an offset of the teeth of the lamination openings of lamination openings of the respective lamination that follow one another in the motor circumferential direction, hereinafter also referred to as opening offset, is advantageously 360°/N with respect to the associated guide circumferential direction. In addition, an offset of the teeth of axially successive lamination openings of the respective guide, hereinafter also referred to as lamination offset, is 360°/N. The said extensions and offsets are conveniently such that the above-described shoulder is formed in the respective guide. For example, if the electric machine has three pins, that is N = 3, the respective tooth segment is 120°, that is the respective tooth extends 120° in the associated guide circumferential direction. In addition, the teeth of lamination openings of successive lamination openings of the respective lamination in the motor circumferential direction are 120° offset from each other. In addition, teeth of axially successive lamination openings of the respective guide are offset by 120° from each other.

Preferably, the opening offset and lamination offset are opposite to each other.

The respective lamination opening can have at least two teeth between which a gap segment is arranged in each case. The number M of teeth of the respective lamination opening is therefore greater than or equal to two, M ≥ 2. Preferably, the teeth of the respective lamination opening are spaced apart from each other in the associated guide circumferential direction with a tooth offset of 360°/M. Advantageously, teeth of the lamination openings of successive lamination openings of the respective lamination in the motor circumferential direction are offset from each other with an opening offset with respect to the associated guide circumferential direction, which opening offset is 360°/2M. Preferably, moreover, teeth of axially successive lamination openings of the respective guide are offset with respect to each other with a lamination offset of 360°/N. The said projections are conveniently such that the above-described shoulder is formed in the respective guide.

The number M of teeth of the respective lamination opening can be six, that is M = 6. With three pins, that is N = 3, this leads to an advantageous variant in which the teeth of the respective lamination opening are spaced apart from one another in the associated guide circumferential direction with a tooth offset of 60°. In addition, teeth of successive lamination openings of the respective lamination in the motor circumferential direction are offset from each other with an opening offset of 30° with respect to the associated guide circumferential direction. Also, teeth of axially successive lamination openings of the respective guide are offset from each other with a lamination offset of 120°.

It is possible to form and manufacture at least two laminations with teeth, each as an individually designed component.

In preferred embodiments, at least two of the lamination of the laminated core having teeth, preferably all lamination of the laminated core having teeth, are designed as identical parts. In this case, the axially successive laminations are rotated relative to each other about the motor axial direction and thus offset in the motor circumferential direction. This offset is also referred to below as row offset.

The row offset is preferably 360°/N. With three pins, that is N = 3, axially successive laminations are thus each offset by 120° relative to one another, so that every third lamination has lamination openings with identically oriented teeth.

It is understood that the laminated core can also have laminations which do not have a lamination opening and/or which have lamination openings but do not comprise such a tooth. In particular, it is possible to arrange at least one such lamination at an axial end face of the laminated core. It is likewise possible to arrange at least one such lamination between such laminations with teeth.

As a matter of fact, the scope of the present invention not only covers the electric machine, but also the method for manufacturing of the electric machine.

Further important features and advantages of the invention are apparent from the dependent claims, from the drawings, and from the accompanying figure description based on the drawings.

It is understood that the above features and those to be explained below can be used not only in the combination indicated in each case, but also in other combinations or on their own, without departing from the scope of the present invention.

Preferred exemplary embodiments of the invention are shown in the drawings and will be explained in more detail in the following description, wherein identical reference signs refer to identical or similar or functionally identical components.

It shows, each schematically
- Fig. 1: a spatial view of an electric machine,
- Fig. 2: a spatial exploded view of a carrier, pins and a stator with a laminated core of the electric machine,
- Fig. 3: a sectional view through the laminated core in the area of a guide,
- Fig. 4: a top view of a lamination of the laminated core,
- Fig. 5: an enlarged view of the area labeled V in Fig. 4,
- Fig. 6: an enlarged view of the area labeled VI in Fig. 4,
- Fig. 7: an enlarged view of the area labeled VIII in Fig. 4,
- Fig. 8: a spatial exploded view of a part of the laminated core in the area of a guide,
- Fig. 9: a top view of the guide,
- Fig. 10: a section through a pin,
- Fig. 11: an enlarged view of the area labeled XI in Fig. 10,
- Fig. 12: a spatial view of the pin,
- Fig. 13: a sectional view of the electric machine in the area of a guide,
- Fig. 14: a top view of the electric machine in the area of the guide,
- Fig. 15: an enlarged view of the area labeled XV in Fig. 14 but in another exemplary embodiment,
- Fig. 16: a top view of the lamination of the laminated core in a further exemplary embodiment,
- Fig. 17: an enlarged view of the area labeled XVII in Fig. 16,
- Fig. 18: an enlarged view of the area labeled XVIII in Fig. 16,
- Fig. 19: an enlarged view of the area labeled XIX in Fig. 16,
- Fig. 20: a spatial exploded view of a part of the laminated core with the lamination of Fig. 16 in the area of a guide,
- Fig. 21: a sectional view of the lamination core in the area of a guide,
- Fig. 22: a spatial view of a pin in another exemplary embodiment,
- Fig. 23: a sectional view through the electric machine in the area of a guide of the laminated core.

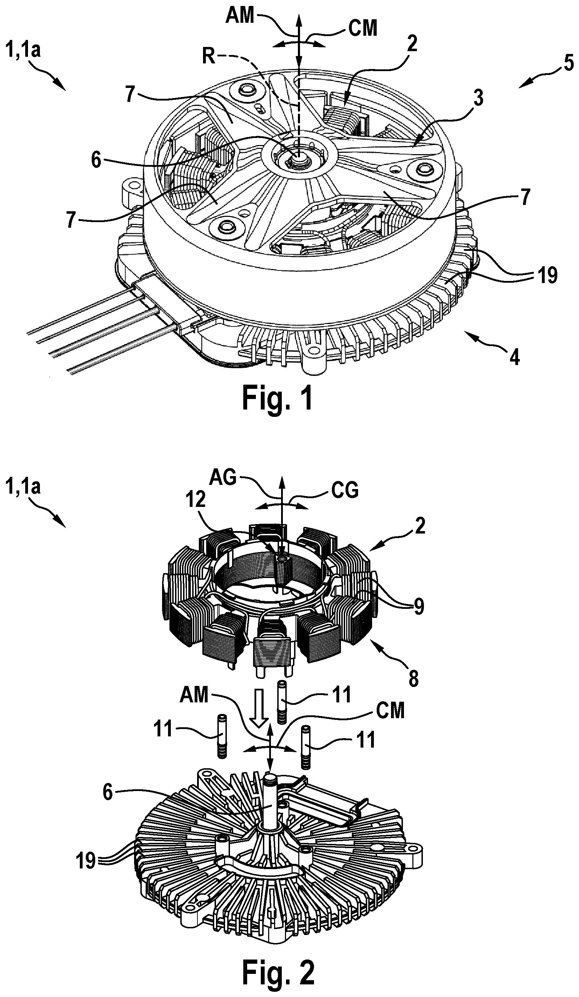

An electric machine 1 as shown in Figure 1 has a stator 2 and a rotor 3. The electric machine 1 also has a carrier 4 to which the stator 2 is fixed and positioned. Figure 2 shows an exploded view in which the carrier 4 and the stator 2 can be seen. During operation of the electric machine 1, the rotor 3 rotates relative to the stator 2 about an axis of rotation R, wherein the axis of rotation R runs parallel, in the shown exemplary embodiments and preferably, coaxial to an axial direction AM of the electric machine 1. The axis of rotation R is only indicated in Figure 1.

The axial direction AM of the electric machine 1 is also referred to below as the motor axial direction AM. In the exemplary embodiments shown, the stator 2 is arranged radially outside the rotor 3 with respect to the motor axial direction AM and surrounds the rotor 3 in a circumferential direction CM of the electric machine 1, which is also referred to hereinafter as the motor circumferential direction CM.

In the exemplary embodiments shown, the rotor 3 is mounted on the carrier 4 via a bolt 6. The bolt 6 extends coaxially to the axis of rotation R motor and is fixed to the carrier 4.

In the exemplary embodiments shown, the electric machine 1 is designed as an electric motor 1a, the electric motor 1a being used for a fan 5. For this purpose, fan blades 7 of the fan 5 are connected to the rotor 3 in a rotationally fixed manner.

The stator 2 has, as can be seen for example in Figures 2, 3 and 21, a laminated core 8 around which at least one winding 9 of the stator 2, visible only in Figure 2, is wound. The laminated core 8 has laminations 10 following one another along the motor axial direction AM and thus axially. The lamination 10 are electrically conductive at least in their core, for example made of silicon steel.

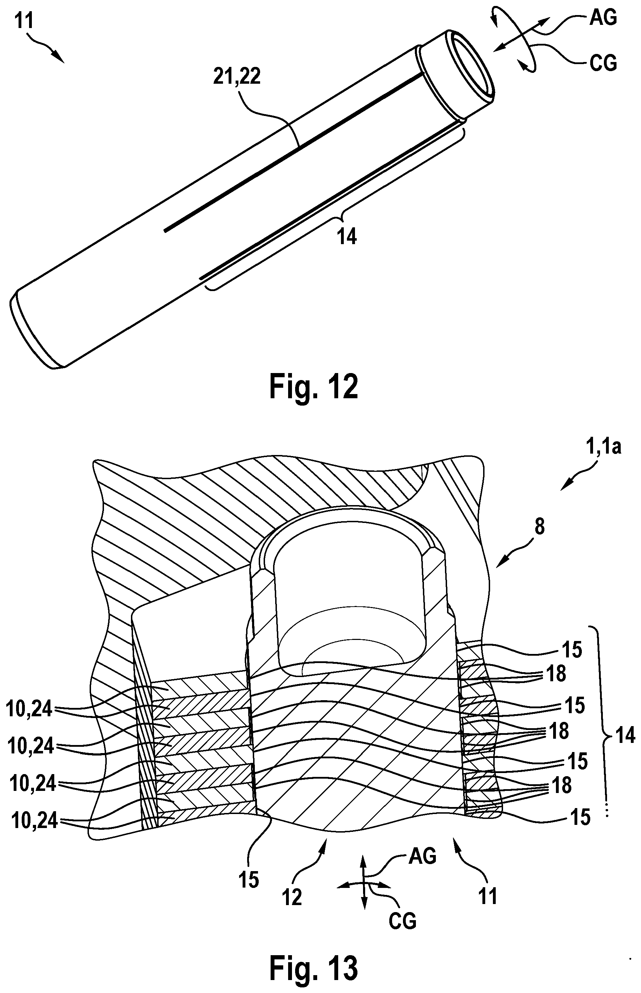

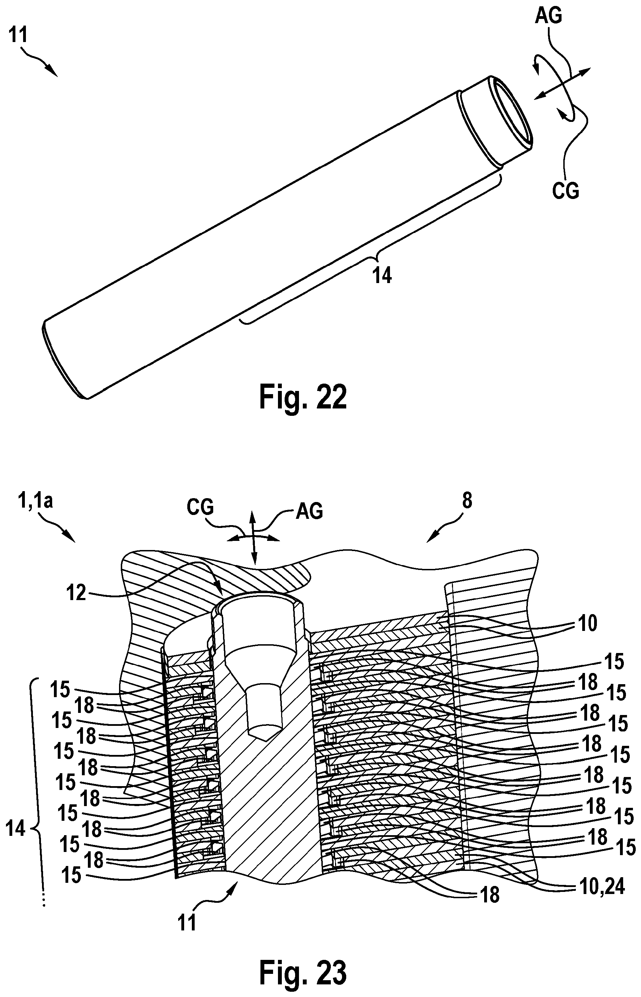

As can be seen, for example, from Figure 2, the electric machine 1 has at least one pin 11 radially offset to the axis of rotation R. In the exemplary embodiments shown, the electric machine 1 comprises at least two pins 11 spaced equidistantly from one another in the motor circumferential direction CM. Figures 12 and 22 show one such pin 11. In the exemplary embodiments shown, the electric machine 1 has three such pins 11, so that a number N of the pins 11 is three, N = 3. The pins 11 are each spaced equidistantly with respect to axis of rotation R and thus with respect to the motor axial direction AM. That is the pins 11 are arranged along a fictitious circle around the axis of rotation R, which is not shown. The respective pin 11 is fixed to the carrier 4. In the exemplary embodiments shown, the respective pin 11 is overmolded by the carrier 4. That is, the respective pin 11 is inserted in an injection mold and is overmolded with the material of the carrier 4. The bolt 6 may be fixed to the carrier 4 in the same manner. In the exemplary embodiments and preferably, carrier 4 and pins 11 are each manufactured at least in their core of an electrically conductive material. For example, the carrier 4 can be made of aluminum and the pins 11 of steel. The respective pin 11 extends axially and thereby projects from the carrier 4. The stator 2 is axially pressed onto the at least one pin 11 so that the stator 2 is positioned relative to the carrier 2 and fixed to the carrier 2. That is, the stator 2 is attached to the respective pin 11 by means of a press fit and so that the at least one press fit positions the stator 2 relative to the carrier 4 and fixes the stator 2 to the carrier4 . In the exemplary embodiments shown the laminated core 8 is pressed onto the respective pin 11 for form said press fits. That is, positioning and fixing of the stator 2 the carrier 4 is carried out using the laminated core 8. In addition, said fixing and positioning is free of screw connections. This allows additional simplification of the manufacture of the electric machine 1 and a further decrease in the cycle time during manufacture.

In the exemplary embodiments shown the laminated core 8 has an associated guide 12 for the respective pin 11 through which the pin 11 passes, as can be seen, for example, from a synopsis of Figures 2 to 4. In the exemplary embodiments shown, the laminated core 8 thus has three such guides 12. The respective guide 12 extends along an associated axial direction AG, which is also referred to hereinafter as guide axial direction AG. The respective guide axial direction AG thus runs parallel to the motor axial direction AM, so that all axial directions AM, AG run parallel to one another. The guide axial directions AG are radially spaced in accordance with the arrangement of the pins 11 with respect to the motor axial direction AM and are arranged equidistantly with respect to one another along the motor circumferential direction CM. The respective guide 12 has an associated opening 13 in at least a part of the laminations 10, in the shown exemplary embodiment in the respective lamination 10, which will also be referred to hereinafter as lamination opening 13. Thus, the respective pin 11 passes through the lamination openings 13 of the associated guide 12.

For manufacturing the electric machine 1, a carrier assembly 25, a stator assembly 26 and a rotor assembly 27 may be provided, as indicated in Figures 1 and 2. The carrier assembly 25 comprises the carrier 4 and the at least one pin 11 fixed to the carrier 4. In the exemplary embodiments shown, the carrier assembly 25 further comprises the bolt 6 fixed to the carrier 4. The stator assembly 26 comprises the stator 2 at least partially. The stator assembly 26, in the exemplary embodiments shown, comprises at least the laminated core 8. The rotor assembly 27 comprises the rotor 3 at least partially. The rotor assembly 27 is not shown in Figure 2 for better overview. Further, in Figure 2 the pins are shown distanced to the carrier 4. As an arrow indicates in Figure 2, the stator assembly 26 is axially press fitted onto the carrier assembly 25 by press fitting the laminated core 8 onto the at least one pin 11, such that the stator assembly 26 is positioned and fixed to the carrier 4. The rotor assembly 27 is rotatably fixed to the carrier 4 using the bolt 6.

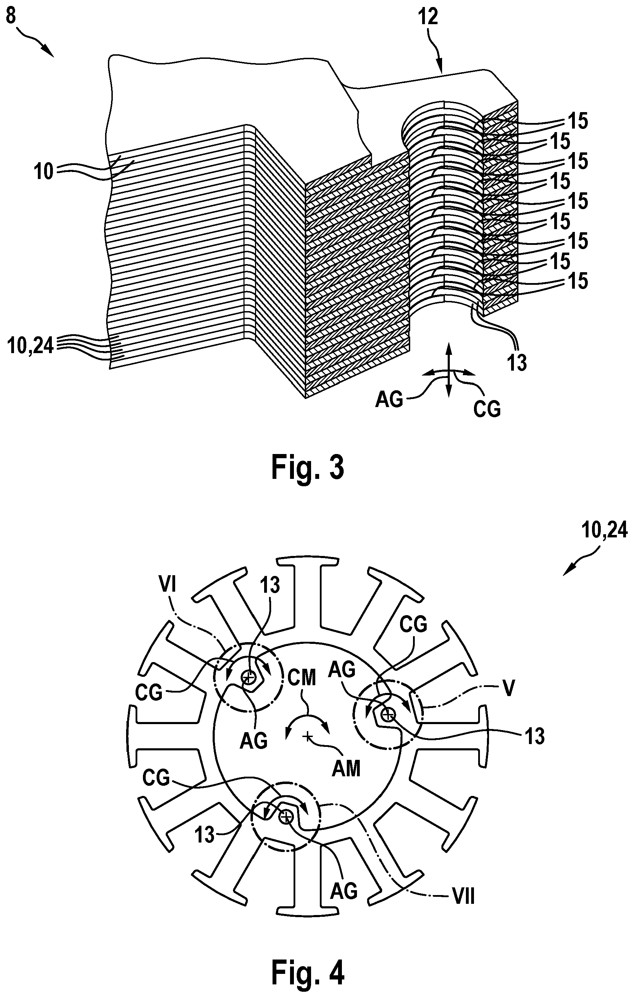

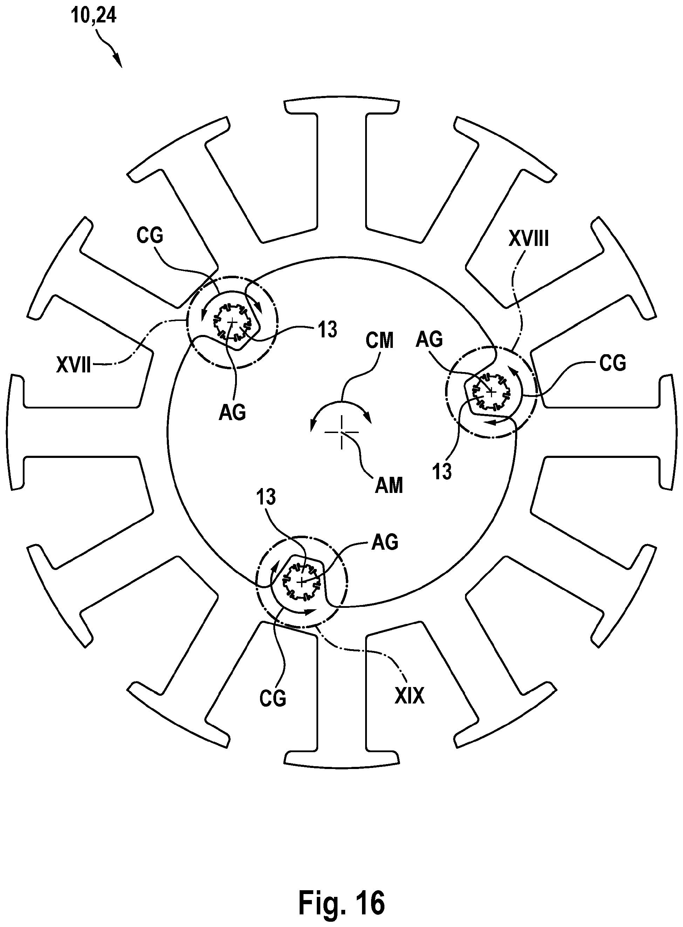

As will be explained below, in the exemplary embodiments shown, the respective pin 11 is in contact with lamination 10 of the laminated core 8 within an axially extending contact section 14 of the pin 11 (see also Figures 12 and 22). In the contact section 14, at least some of the lamination openings 13 each have at least one tooth 15 projecting radially inward with respect to the associated guide axial direction AG. The respective tooth 15 is bent to form associated press fit. That is, the respective tooth 16 is bent due to the associated press fit. In the exemplary embodiments shown, in the contact section 14 the respective lamination opening 13 has at least one tooth 15 projecting radially inwards with respect to the associated guide axial direction AG. Figures 4 and 16 each show a top view of a lamination 10 with lamination openings 13, which each have at least one such tooth 15. As shown in Figures 4 and 16, the respective tooth 15 extends in a circumferential direction CD of the associated guide 12, hereinafter also referred to as guide circumferential direction CG, over a tooth segment 16. Thus, a gap segment 17 adjoining in guide circumferential direction CG in the associated lamination opening 13 is free of teeth 15. As can be seen, for example, from Figures 13, 14 as well as 23, the respective tooth 15 contacts the associated pin 11. In addition, the lamination opening 13 is spaced apart from the associated pin 11 in a clearance segment 18 following the respective tooth 15 of the associated lamination opening 13 in the guide circumferential direction CG of the associated guide 12 and is thus free of contact to the pin 11.

As described before, the laminated core 8 is pressed onto the pins 11 so that a press fit is produced between the laminated core 8 and the pins 11. Due to the described clearance segments 18, the force required for the press fit is reduced, so that the manufacture of the electric machine 1 can be simplified and precise and with decreased cycle time. At the same time, the clearance segments 18 allow a defined deforming of the teeth 15, so that there is a reliable electrical and thermal contact between the laminated core 8 and the pins 11. Consequently, heat can be transferred from the laminated core 8 to the pins 11 and via the pins 11 to the carrier 4 in a reliable and improved manner. Thus, improved cooling of the laminated core 8 and consequently of the stator 2 is achieved. In the exemplary embodiments shown, the carrier 4 further has axially projecting ribs 19 for improved thermal dissipation, as can be seen from Figure 2. The carrier 4 is grounded by means of an electrical connection, as indicated in Figure 1. Thus the pins 11 are also grounded. The reliable electrical contact of the teeth 15 with the pins 11 provides a more reliable grounding of the laminated core 8. Thus, undesired electromagnetic interference in the laminated core 8 can be reduced/compensated in a simplified manner. As a result, the operation and the electromagnetic compensation and compatibility of the electric machine 1 are improved.

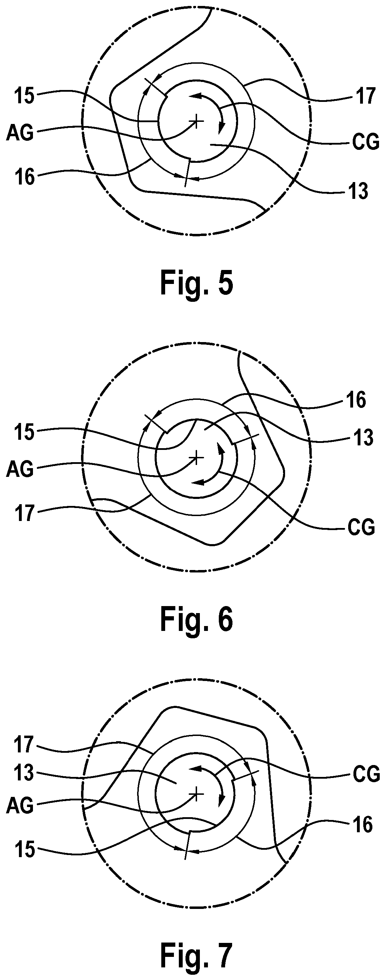

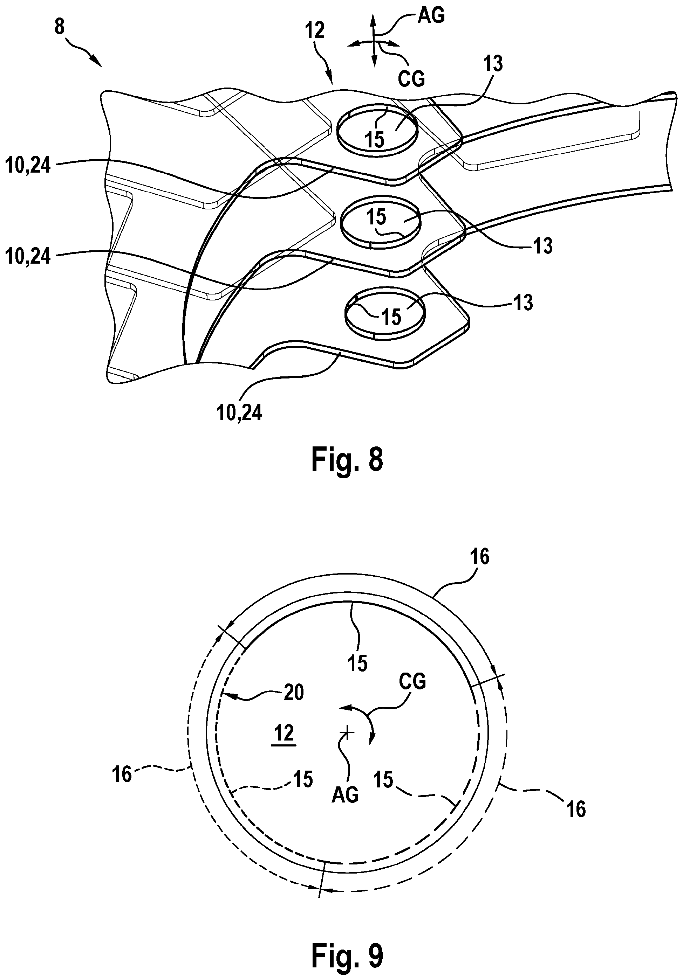

In the exemplary embodiments shown in Figures 3 to 15, the respective lamination opening 13 has a single tooth 15, as can be seen from a synopsis of Figures 4 to 7. Figures 5 to 7 each show enlarged views of one of the lamination openings 13 of the lamination 10 shown in Figure 4. In these exemplary embodiment, the respective tooth 15 extends over 120° in the associated guide circumferential direction CG, so the tooth segment 16 is 120°. In other words, the tooth segment is 360°/N, where the number N of pins 3 and thus guides 12 is three, as explained above. As can further be seen from Figures 4 to 7, the teeth 15 of successive lamination openings 13 of the respective lamination 10 are offset with respect to each other with an offset with respect to the associated guide circumferential direction CG, which offset is hereinafter also referred to as the opening offset. The opening offset is 120°, that is 360°/N. Figure 8 shows axially successive lamination openings 13 of a guide 12. As can be seen from Figure 8, in the exemplary embodiments shown in Figures 3 to 15, the teeth 15 of axially successive lamination openings 13 of the respective guide 12 are offset from one another with respect to the associated guide circumferential direction CG, which offset is also referred to below as lamination offset. The lamination offset is 360°/N, that is 120°. As can be seen from a synopsis of Figures 4 to 8, the opening offset and the lamination offset are in opposite to each other. As indicated in Figure 9, an axial top view of the respective guide 12 thus results in a shoulder 20, which projects radially inwards with respect to the associated guide axial direction AG and is closed in the associated guide circumferential direction CG. The teeth 15 of the lamination openings 13 of the respective guide 12 are thus offset relative to one another in such a way that such a shoulder 20 is formed. In Figure 9, one of the teeth 15 is shown with a solid line and the other teeth 15 are shown with different dashed lines to make it clear that the shoulder 20 is composed of teeth 15 that are axially offset from one another.

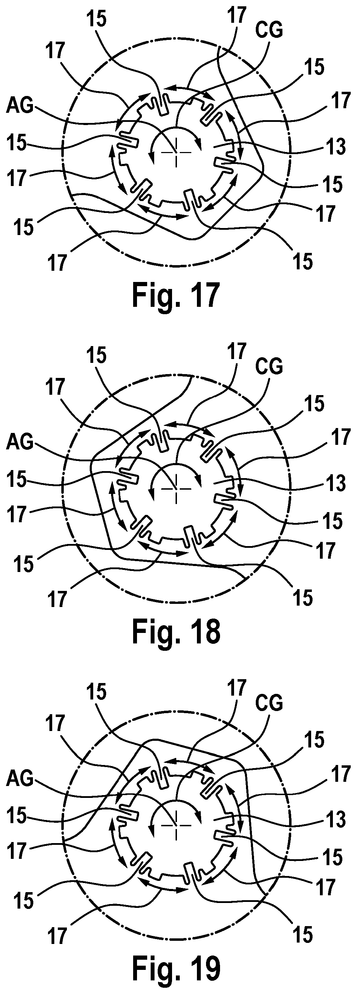

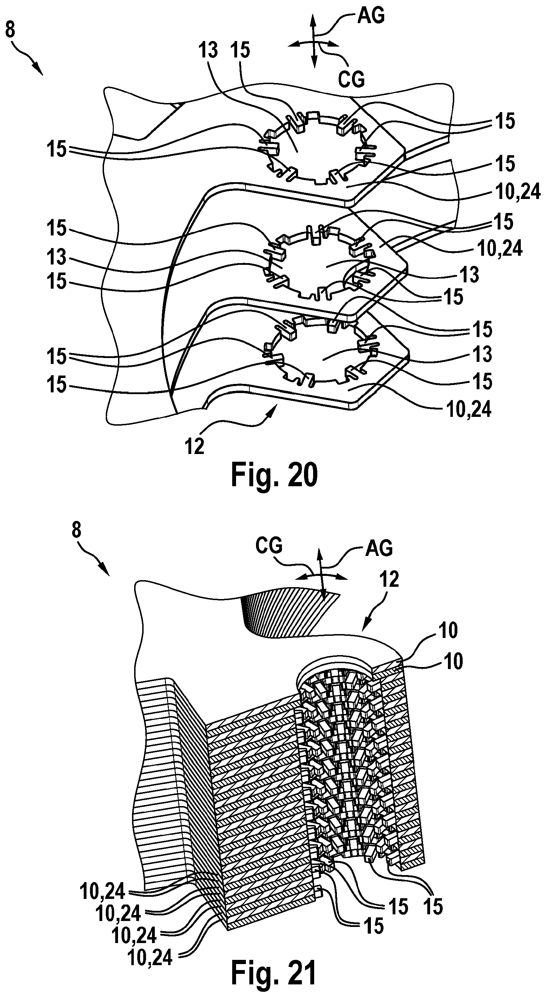

In the exemplary embodiment of Figures 16 to 23, the respective lamination opening 13 has at least two teeth 15. The number M of teeth 15 of the respective lamination opening 13 is therefore at least two, M ≥ 2. In the exemplary embodiment shown, the respective lamination opening 13 has six teeth 15, that is M = 6. The teeth 15 of the respective lamination opening 13 are arranged equidistantly to one another in the associated guide circumferential direction CG. In the exemplary embodiment shown, therefore, pairs of teeth 15 are arranged radially opposite each other in the respective lamination opening 13 with respect to the associated guide axial direction AG. The teeth 15 of the respective lamination opening 13 are also spaced apart from one another by gap segments 17 in the associated guide circumferential direction CG. Figures 17 to 19 each show an enlarged view of one of the lamination openings 13 of the lamination 10 shown in Figure 16. As can be seen from a synopsis of Figures 16 to 19, in the exemplary embodiment shown in Figures 16 to 23, the teeth 15 of the respective lamination opening 13 are spaced apart from one another in the associated guide circumferential direction CG with an offset, which is also referred to hereinafter as tooth offset. The tooth offset thus corresponds to the extension of the respective gap segment 17 in the associated guide circumferential direction CG. In the exemplary embodiment shown, the tooth offset is 60°, that is 360°/M. Furthermore, the opening offset, that is the offset of the teeth 14 of successive lamination openings 13 of the respective lamination 10 in the motor circumferential direction AM, is 20°, that is 360°/2M, with respect to the associated guide circumferential direction CG. Figure 20 shows axially successive lamination openings 13 of one of the guides 12. As can be seen in particular from Figure 20, the teeth 15 of axially successive lamination openings 13 of the respective guide 12 are offset with respect to each other by a lamination offset of 120°, that is 360°/N. Thus, in axial not shown plan view, a not shown shoulder 20 of the type described above may result for the respective guide 12.

In the exemplary embodiments shown, the laminations 10 of the laminated core 8 having teeth 15 are formed as identical parts 24. In this case, axially successive laminations 10 are arranged rotated relative to one another about the motor axial direction AM, that is with an offset in the motor circumferential direction CM. This offset, which is also referred to below as row offset, is 120°. The row offset is therefore 360°/N.

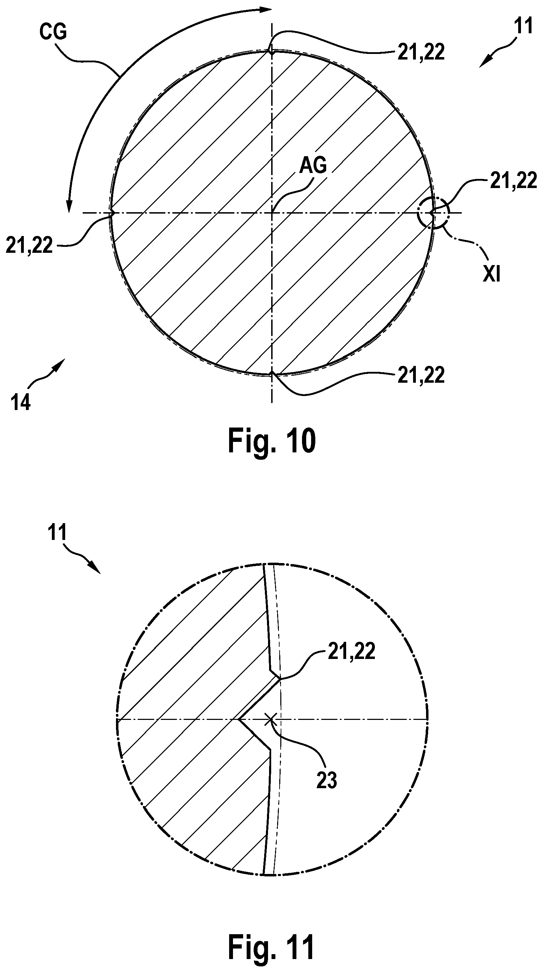

As shown in Figures 10 to 12, the respective pin 12 may have in the associated contact section 14 at least one projection 21 projecting radially outward with respect to the associated guide axial direction CG. Figure 10 shows a radial section through the pin 11 and Figure 11 shows an enlarged view of Figure 10 in the region of such a projection 21, and Figure 12 shows a spatial view of the pin 12. As can be seen from Figure 12, the respective projection 21 extends axially, in the shown exemplary embodiment over the entire extension of the contact section 14. As can be seen in particular from Figure 11, the projection 21 in the shown exemplary embodiment and preferably is formed as a radially projecting tip 22. The respective projection 21, in particular the respective tip 22, in the shown exemplary embodiment is introduced in a spanning manner, in particular by means of scoring, into the pin 11, so that a depression 23 is formed adjacent to the projection 21, in particular the tip 22. As can be seen from a synopsis of Figures 10 and 12, the pin 11 in the exemplary embodiment shown has four such projections 21, which are arranged equidistantly to one another in the associated guide circumferential direction CG, that is two of the projections 21 are arranged radially opposite one another in each case.

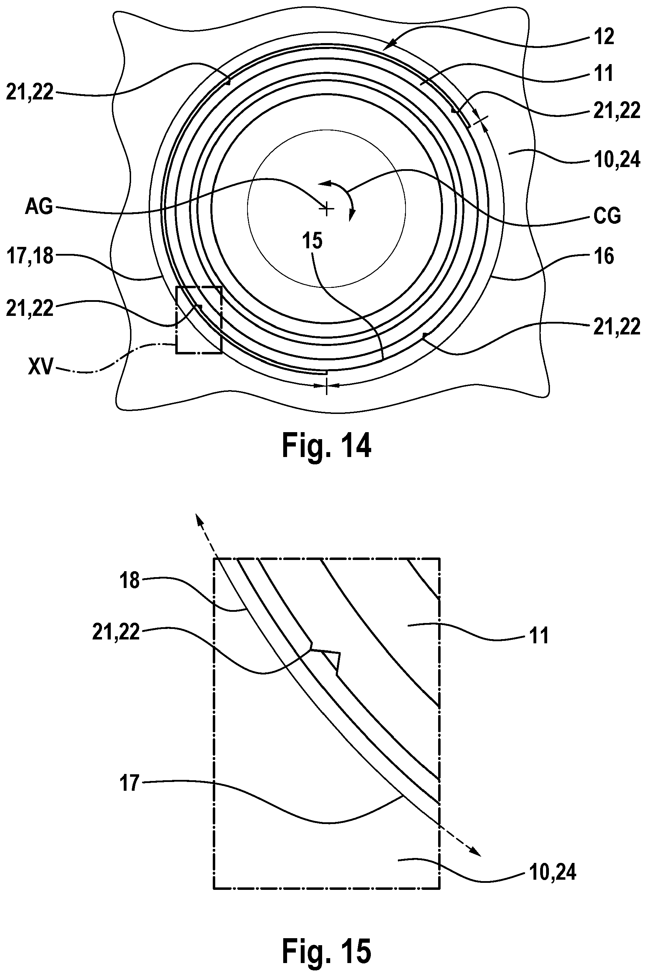

The pin 11 shown in the exemplary embodiment of Figures 10 to 12 is used exemplarily in the exemplary embodiments shown in Figures 3 to 15. Here, the respective projection 21 is in contact with at least two laminations 10 of the associated guide 12. In the exemplary embodiments shown, in the respective lamination opening 13 one of the projections 21 of the associated pin 11 is in contact with the tooth 15 of the lamination opening 13, whereas the remaining projections 21 are spaced apart from the tooth 15 of the lamination opening 13. In the tooth segment 16, there is thus a locally limited interruption of the contact between the tooth 15 and the pin 11 in the region of the recess 23. In the exemplary embodiment of Figure 14, the projections 21 spaced from the tooth 15 are entirely spaced from the lamination opening 13 and thus from the lamination 10 and are consequently free of contact to the lamination 10. This means that in this exemplary embodiment the gap segment 17 corresponds to the clearance segment 18. Figure 15 shows an enlarged view in the region labeled XV in Figure 14 of such a projection 21, but in a different exemplary embodiment. In the exemplary embodiment of Figure 15, the projections 21 distanced to the tooth 15 are also in contact with the lamination opening 13. The projections 21 spaced from the tooth 15 thus divide the gap segment 15 into clearance segments 18.

In the exemplary embodiment shown in Figure 22, the pin 11 is smooth in the contact section 14, that is in particular free of projections 21 and recesses 23 of the type described above. In this exemplary embodiment, the respective gap segment 17 thus corresponds to a clearance segment 18 (see Figure 23). The pin 11 shown in the exemplary embodiment of Figures 22 is used exemplarily in the exemplary embodiments shown in Figures 16 to 23.

## Claims

1. Electric machine (1), in particular electric motor (1a) for a fan (5),
- with a rotor (3) which rotates in operation about an axis of rotation (R), wherein the axis of rotation (R) runs parallel to a motor axial direction (AM) of the electric machine (1),
- with a stator (2) extending in a motor circumferential direction (CM),
- with a carrier (4) extending radially with respect to the motor axial direction (AM),
- wherein the stator (2) is attached to the carrier (4),
**characterized in that**
- at least one pin (11) arranged radially offset to the axis of rotation (R) is fixed to the carrier (4) and projects axially from the carrier (4),
- the stator (2) is axially pressed onto the at least one pin (11) so that the stator (2) is attached to the respective pin (11) by means of a press fit and so that the at least one press fit positions the stator (2) relative to the carrier (4) and fixes the stator (2) to the carrier (4).

2. Electric machine according to claim 1,
**characterized in**
**that** the electric machine (1) comprises at least two, in particular three, such pins (11), wherein the pins (11) are arranged distanced to each other in the motor circumferential direction (CM).

3. Electric machine according to claim 1 or 2,
**characterized in**
**that** the stator (2) for the respective pin (11) comprises an associated guide (12) extending axially, wherein each guide (12) is axially pressed onto the associated pin (11) to form such a press fit.

4. Electric machine according to claim 3,
**characterized in that**
- the stator (2) has a laminated core (8) with axially successive laminations (10),
- the lamination core (8) for the respective pin (11) has an associated such guide (12) through which the pin (11) passes,
- the respective guide (12) extends in an associated guide axial direction (AG) and has an associated lamination opening (13) in at least a part of the laminations (10), so that the respective pin (11) passes through the lamination openings (13) of the associated guide (12),
- the lamination core (8) is axially pressed onto the at least one pin (11) so that the lamination core (8) is press fitted to position the stator (2) relative to the carrier (4) and to fix the stator (2) to the carrier (4),
- the respective pin (11) is in contact with the lamination core (8) in an axial contact section (14) of the pin (11).

5. Electric machine according to claim 4,
**characterized in that**
- in the respective contact section (14) at least some of the lamination openings (13) each have at least one tooth (15) projecting radially inwardly with respect to the associated guide axial direction (AG),
- the respective tooth (15) extends in a guide circumferential direction (CG) of the associated guide (12) over a tooth segment (16), so that a gap segment (17) adjoining in the guide circumferential direction (CG) in the associated lamination opening (13) is free of such teeth (15),
- the respective tooth (15) is bent to form the press fit and contacts the associated pin (11) due to the press fit,
- a clearance segment (18) following the respective tooth (15) in the associated lamination opening (13) in the guide circumferential direction (CG) of the associated guide (12) is free of contact with the associated pin (11).

6. Electrical machine according to claim 5,
**characterized in**
**that** axially successive teeth (15) and gap segments (17) are arranged offset from one another in the guide circumferential direction (CG) of the associated guide (12), so that the teeth (15) of the laminations (10) of at least one of the guides (12), in an axial plan view of the guide (12), form a shoulder (20) of the guide which is closed in the guide circumferential direction (CG) and projects radially inwards.

7. Electric machine according to any one of claims 4 to 6,
**characterized in that**
- at least one of the pins (11), preferably the respective pin (11), has in the associated contact section (14) at least one projection (21) which projects radially outwards with respect to the associated guide axial direction (AG) and extends axially,
- the respective projection (21) in the contact section (14) is in contact with at least two laminations (10) of the associated guide (12).

8. Electric machine according to claim 7,
**characterized in**
**that** in at least one guide (12) at least one projection (21) is in contact with a tooth (15) and at least one projection (21) is in contact with the at least one tooth (15) in the associated guide circumferential direction (CG) spaced apart from the lamination opening (13).

9. Electric machine according to any one of claims 5 to 8,
**characterized in that**
- the respective lamination opening (13) has a single tooth (15)
- the electric machine (1) has a number of N pins (11) which are equidistantly spaced from each other in the motor circumferential direction (CM),
- the respective tooth segment is 360°/N,
- teeth (15) of successive lamination openings (13) of the respective lamination (10) in the motor circumferential direction (CM) are offset from each other with an opening offset with respect to the associated guide circumferential direction (CG), which opening offset is 360°/N,
- teeth (15) of axially successive lamination openings (13) of the respective guide (12) are offset with respect to the associated guide circumferential direction (CG) with a lamination offset of 360°/N with respect to each other.

10. Electric machine according to claim 5 to 8,
**characterized in that**
- the respective lamination opening (13) has at least M teeth (15), between each of which a gap segment (17) is arranged, M being at least two,
- the electric machine (1) has a number of N pins (11) which are equidistantly spaced from each other in the motor circumferential direction (CM),
- teeth (15) of the respective lamination opening (13) are spaced apart from one another in the associated guide circumferential direction (CG) with a tooth offset of 360°/M,
- teeth (15) of the lamination openings (13) of successive lamination openings (13) of the respective lamination (10) in the motor circumferential direction (CM) are offset from each other with an opening offset with respect to the associated guide circumferential direction (CG), which opening offset is 360°/2M,
- teeth (15) of axially successive lamination openings (13) of the respective guide (12) are offset from each other with a lamination offset of 360°/N.

11. Electric machine according to one of claims 5 to 10,
**characterized in**
**that** the lamination (10) of the laminated core (8) having teeth (15) are formed as identical parts (24), axially successive lamination (10) being arranged rotated relative to one another about the motor axial direction (AM).

12. Method for manufacturing an electric machine (1) according to any one of the previous claims,
- wherein a carrier assembly (25) comprising the carrier (4) and the at least one pin (11) fixed to the carrier (4) is provided,
- wherein a stator assembly (26) comprising the stator (2) at least partially is provided,
- wherein a rotor assembly (27) comprising the rotor (3) at least partially is provided,
- wherein the stator assembly (26) is axially press fitted onto the at least one pin (11) of the carrier assembly (25), such that the stator assembly (26) is positioned and fixed to the carrier assembly (25),
- wherein the rotor assembly (27) is rotatably fixed to the carrier assembly (25).

13. Method according to claim 12,
**characterized in that**
- the carrier (4) is manufactured by injection molding,
- the at least one pin (11) is inserted as an insert in an injection mold and then the carrier (4) is manufactured by injection molding such that the at least one pin (11) is fixed to the carrier (4) and projects axially from the carrier (4).

14. Method according to claim 12 or 13,
**characterized in that**
- a stator assembly (26) having a laminated core (8) according to any one of the claims 4 to 12 is provided,
- the laminated core (8) is axially press fitted onto the at least one pin (11) of the carrier assembly (25).

## Patentansprüche

1. Elektrische Maschine (1), insbesondere Elektromotor (1a) für einen Lüfter (5),
- mit einem Rotor (3), der sich im Betrieb um eine Drehachse (R) dreht, wobei die Drehachse (R) parallel zu einer Motoraxialrichtung (AM) der elektrischen Maschine (1) verläuft,
- mit einem sich in einer Motorumfangsrichtung (CM) erstreckenden Stator (2),
- mit einem sich in Bezug zu der Motoraxialrichtung (AM) radial erstreckenden Träger (4),
- wobei der Stator (2) an dem Träger (4) angebracht ist,
**dadurch gekennzeichnet, dass**
- zumindest ein zu der Drehachse (R) radial versetzt angeordneter Stift (11) an dem Träger (4) befestigt ist und axial von dem Träger (4) vorsteht,
- der Stator (2) axial auf den zumindest einen Stift (11) gepresst ist, sodass der Stator (2) mittels einer Presspassung auf dem jeweiligen Stift (11) angebracht ist und sodass die zumindest eine Presspassung den Stator (2) relativ zu dem Träger (4) positioniert und den Stator (2) an dem Träger (4) fixiert.

2. Elektrische Maschine nach Anspruch 1,
**dadurch gekennzeichnet,**
**dass** die elektrische Maschine (1) zumindest zwei, insbesondere drei, derartige Stifte (11) umfasst, wobei die Stifte (11) in der Motorumfangsrichtung (CM) beabstandet zueinander angeordnet sind.

3. Elektrische Maschine nach Anspruch 1 oder 2,
**dadurch gekennzeichnet,**
**dass** der Stator (2) für den jeweiligen Stift (11) eine zugehörige, sich axial erstreckende Führung (12) umfasst, wobei jede Führung (12) axial auf den zugehörigen Stift (11) gepresst ist, um eine solche Presspassung zu bilden.

4. Elektrische Maschine nach Anspruch 3,
**dadurch gekennzeichnet, dass**
- der Stator (2) ein Blechpaket (8) mit axial aufeinanderfolgenden Lamellen (10) aufweist,
- das Blechpaket (8) für den jeweiligen Stift (11) eine zugehörige derartige Führung (12) aufweist, durch die der Stift (11) hindurch tritt,
- die jeweilige Führung (12) sich in einer zugehörigen Führungsaxialrichtung (AG) erstreckt und in mindestens einem Teil der Lamellen (10) eine zugehörige Lamellenöffnung (13) aufweist, sodass der jeweilige Stift (11) durch die Lamellenöffnung (13) der zugehörigen Führung (12) hindurch tritt,
- das Blechpaket (8) axial auf den mindestens einen Stift (11) gepresst ist, sodass das Blechpaket (8) durch Presspassung den Stator (2) relativ zu dem Träger (4) positioniert und den Stator (2) an dem Träger (4) fixiert,
- der jeweilige Stift (11) in einem axialen Kontaktabschnitt (14) des Stifts (11) mit dem Blechpaket (8) in Kontakt steht.

5. Elektrische Maschine nach Anspruch 4,
**dadurch gekennzeichnet, dass**
- in dem jeweiligen Kontaktabschnitt (14) mindestens einige der Lamellenöffnungen (13) jeweils mindestens einen Zahn (15) aufweisen, der in Bezug zu der zugehörigen Führungsaxialrichtung (AG), radial nach innen vorsteht,
- der jeweilige Zahn (15) sich in einer Führungsumfangsrichtung (CG) der zugehörigen Führung (12) über ein Zahnsegment (16) erstreckt, sodass ein in Führungsumfangsrichtung (CG) anschließendes Lückensegment (17) in der zugehörigen Lamellenöffnung (13) frei von solchen Zähnen (15) ist,
- der jeweilige Zahn (15) zur Bildung der Presspassung gebogen ist und aufgrund der Presspassung den zugehörigen Stift (11) kontaktiert,
- ein in der Führungsumfangsrichtung (CG) der zugehörigen Führung (12) auf den jeweiligen Zahn (15) folgendes Freiraumsegment (18) in der zugehörigen Lamellenöffnung (13) frei von Kontakt mit dem zugehörigen Stift (11) ist.

6. Elektrische Maschine nach Anspruch 5,
**dadurch gekennzeichnet,**
**dass** axial aufeinanderfolgende Zähne (15) und Lückensegmente (17) in der Führungsumfangsrichtung (CG) der zugehörigen Führung (12) versetzt zueinander angeordnet sind, sodass die Zähne (15) der Lamellen (10) mindestens einer der Führungen (12) in einer axialen Draufsicht auf die Führung (12) eine Schulter (20) der Führung bilden, die in der Führungsumfangsrichtung (CG) geschlossen ist, und radial nach innen vorsteht.

7. Elektrische Maschine nach einem der Ansprüche 4 bis 6,
**dadurch gekennzeichnet, dass**
- mindestens einer der Stifte (11), bevorzugt der jeweilige Stift (11), im zugehörigen Kontaktabschnitt (14) mindestens einen Vorsprung (21) aufweist, der in Bezug zu der zugehörigen Führungsaxialrichtung (AG) radial nach außen vorsteht, und sich axial erstreckt,
- der jeweilige Vorsprung (21) im Kontaktabschnitt (14) mit mindestens zwei Lamellen (10) der zugehörigen Führung (12) in Kontakt steht.

8. Elektrische Maschine nach Anspruch 7,
**dadurch gekennzeichnet,**
**dass** in mindestens einer Führung (12) mindestens ein Vorsprung (21) mit einem Zahn (15) in Kontakt steht und mindestens ein Vorsprung (21) in der zugehörigen Führungsumfangsrichtung (CG) beabstandet von der Lamellenöffnung (13) mit dem mindestens einen Zahn (15) in Kontakt steht.

9. Elektrische Maschine nach einem der Ansprüche 5 bis 8,
**dadurch gekennzeichnet, dass**
- die jeweilige Lamellenöffnung (13) einen einzelnen Zahn (15) aufweist,
- die elektrische Maschine (1) eine Anzahl von N Stiften (11) aufweist, die in der Motorumfangsrichtung (CM) in gleichem Abstand zueinander beabstandet sind,
- das jeweilige Zahnsegment 360°/N ist,
- Zähne (15) aufeinanderfolgender Lamellenöffnungen (13) der jeweiligen Lamelle (10) in der Motorumfangsrichtung (CM) mit einem Öffnungsversatz in Bezug zu der zugehörigen Führungsumfangsrichtung (CG) voneinander versetzt sind, wobei der Öffnungsversatz 360°/N ist,
- Zähne (15) axial aufeinanderfolgender Lamellenöffnungen (13) der jeweiligen Führung (12) in Bezug zur zugehörigen Führungsumfangsrichtung (CG) mit einem Lamellenversatz von 360°/N in Bezug zueinander versetzt sind.

10. Elektrische Maschine nach Anspruch 5 bis 8,
**dadurch gekennzeichnet, dass**
- die jeweilige Lamellenöffnung (13) mindestens M Zähne (15) aufweist, zwischen denen jeweils ein Lückensegment (17) angeordnet ist, wobei M mindestens zwei ist,
- die elektrische Maschine (1) eine Anzahl von N Stiften (11) aufweist, die in der Motorumfangsrichtung (CM) in gleichem Abstand zueinander beabstandet sind,
- Zähne (15) der jeweiligen Lamellenöffnung (13) in der zugehörigen Führungsumfangsrichtung (CG) mit einem Zahnversatz von 360°/M voneinander beabstandet sind,
- Zähne (15) der Lamellenöffnungen (13) aufeinanderfolgender Lamellenöffnungen (13) der jeweiligen Lamelle (10) in der Motorumfangsrichtung (CM) mit einem Öffnungsversatz in Bezug zu der zugehörigen Führungsumfangsrichtung (CG) voneinander versetzt sind, wobei der Öffnungsversatz 360°/2M ist,
- Zähne (15) axial aufeinanderfolgender Lamellenöffnungen (13) der jeweiligen Führung (12) mit einem Lamellenversatz von 360°/N voneinander versetzt sind.

11. Elektrische Maschine nach einem der Ansprüche 5 bis 10,
**dadurch gekennzeichnet,**
**dass** die Lamellen (10) des Blechpakets (8), die Zähne (15) aufweisen, als identische Teile (24) gebildet sind, wobei axial aufeinanderfolgende Lamellen (10) relativ zueinander um die Motoraxialrichtung (AM) verdreht angeordnet sind.

12. Verfahren zur Herstellung einer elektrischen Maschine (1) nach einem der vorstehenden Ansprüche,
- wobei eine Trägeranordnung (25), umfassend den Träger (4) und den mindestens einen an dem Träger (4) befestigten Stift (11), bereitgestellt wird,
- wobei eine den Stator (2) mindestens teilweise umfassende Statoranordnung (26) bereitgestellt wird,
- wobei eine den Rotor (3) mindestens teilweise umfassende Rotoranordnung (27) bereitgestellt wird,
- wobei die Statoranordnung (26) mittels Presspassung axial auf den mindestens einen Stift (11) der Trägeranordnung (25) gepresst wird, sodass die Statoranordnung (26) an der Trägeranordnung (25) positioniert und befestigt ist,
- wobei die Rotoranordnung (27) drehbar an der Trägeranordnung (25) befestigt wird.

13. Verfahren nach Anspruch 12,
**dadurch gekennzeichnet, dass**
- der Träger (4) im Spritzgussverfahren hergestellt wird,
- der mindestens eine Stift (11) als Einlegeteil in eine Spritzgussform eingelegt wird und anschließend der Träger (4) im Spritzgussverfahren hergestellt wird, sodass der mindestens eine Stift (11) an dem Träger (4) befestigt ist und axial von dem Träger (4) vorsteht.

14. Verfahren nach Anspruch 12 oder 13,
**dadurch gekennzeichnet, dass**
- eine Statoranordnung (26) mit einem Blechpaket (8) nach einem der Ansprüche 4 bis 12 bereitgestellt wird,
- das Blechpaket (8) mittels Presspassung axial auf den mindestens einen Stift (11) der Trägeranordnung (25) gepresst wird.

## Revendications

1. Machine électrique (1), en particulier un moteur électrique (1a) pour un ventilateur (5),
- avec un rotor (3) qui tourne en fonctionnement autour d'un axe de rotation (R), dans laquelle l'axe de rotation (R) est parallèle à une direction axiale de moteur (AM) de la machine électrique (1),
- avec un stator (2) s'étendant dans une direction circonférentielle de moteur (CM),
- avec un support (4) s'étendant radialement par rapport à la direction axiale de moteur (AM),
- dans laquelle le stator (2) est attaché au support (4),
**caractérisée en ce que**
- au moins une broche (11) agencée radialement décalée par rapport à l'axe de rotation (R) est fixée au support (4) et fait saillie axialement à partir du support (4),
- le stator (2) est pressé axialement sur la au moins une broche (11) de sorte que le stator (2) soit attaché à la broche respective (11) au moyen d'un ajustement serré et de sorte que le au moins un ajustement serré positionne le stator (2) par rapport au support (4) et fixe le stator (2) au support (4).

2. Machine électrique selon la revendication 1,
**caractérisée en ce que**
la machine électrique (1) comprend au moins deux, en particulier trois, telles broches (11), dans laquelle les broches (11) sont agencées à distance les unes des autres dans la direction circonférentielle de moteur (CM).

3. Machine électrique selon la revendication 1 ou 2,
**caractérisée en ce que**
le stator (2) pour la broche respective (11) comprend un guide associé (12) s'étendant axialement, dans laquelle chaque guide (12) est pressé axialement sur la broche associée (11) pour former un tel ajustement serré.

4. Machine électrique selon la revendication 3,
**caractérisée en ce que**
- le stator (2) présente un noyau stratifié (8) avec des stratifications axialement successives (10),
- le noyau stratifié (8) pour la broche respective (11) présente un tel guide associé (12) à travers lequel la broche (11) passe,
- le guide respectif (12) s'étend dans une direction axiale de guide associée (AG) et présente une ouverture de stratification associée (13) dans au moins une partie des stratifications (10), de sorte que la broche respective (11) passe à travers les ouvertures de stratification (13) du guide associé (12),
- le noyau de stratification (8) est pressé axialement sur la au moins une broche (11), de sorte que le noyau de stratification (8) soit ajusté par ajustement serré pour positionner le stator (2) par rapport au support (4) et pour fixer le stator (2) au support (4),
- la broche respective (11) est en contact avec le noyau de stratification (8) dans une section de contact axial (14) de la broche (11).

5. Machine électrique selon la revendication 4,
**caractérisée en ce que**
- dans la section de contact respective (14), au moins certaines des ouvertures de stratification (13) présentent chacune au moins une dent (15) faisant saillie radialement vers l'intérieur par rapport à la direction axiale de guide associée (AG),
- la dent respective (15) s'étend dans une direction circonférentielle de guide (CG) du guide associé (12) sur un segment de dent (16), de sorte qu'un segment d'espace (17) adjacent dans la direction circonférentielle de guide (CG) dans l'ouverture de stratification associée (13) soit libre de telles dents (15),
- la dent respective (15) est pliée pour former l'ajustement serré et vient en contact avec la broche associée (11) en raison de l'ajustement serré,
- un segment de jeu (18) suivant la dent respective (15) dans l'ouverture de stratification associée (13) dans la direction circonférentielle de guide (CG) du guide associé (12) est libre de tout contact avec la broche associée (11).

6. Machine électrique selon la revendication 5,
**caractérisée en ce que**
des dents (15) et des segments d'espace (17) axialement successifs sont agencés de manière décalée les uns par rapport aux autres dans la direction circonférentielle de guide (CG) du guide (12) associé, de sorte que les dents (15) des stratifications (10) d'au moins un des guides (12), dans une vue en plan axial du guide (12), forment un épaulement (20) du guide qui est fermé dans la direction circonférentielle de guide (CG) et fait saillie radialement vers l'intérieur.

7. Machine électrique selon l'une quelconque des revendications 4 à 6,
**caractérisée en ce que**
- au moins l'une des broches (11), de préférence la broche respective (11), présente, dans la section de contact associée (14) au moins une saillie (21) qui fait saillie radialement vers l'extérieur par rapport à la direction axiale de guide associée (AG) et qui s'étend axialement,
- la saillie respective (21) dans la section de contact (14) est en contact avec au moins deux stratifications (10) du guide associé (12).

8. Machine électrique selon la revendication 7,
**caractérisée en ce que**
dans au moins un guide (12), au moins une saillie (21) est en contact avec une dent (15) et au moins une saillie (21) est en contact avec la au moins une dent (15) dans la direction circonférentielle de guide associée (CG) espacée de l'ouverture de stratification (13).

9. Machine électrique selon l'une quelconque des revendications 5 à 8,
**caractérisée en ce que**
- l'ouverture de stratification respective (13) présente une seule dent (15),
- la machine électrique (1) présente un nombre N de broches (11) qui sont espacées de manière équidistante les unes des autres dans la direction circonférentielle de moteur (CM),
- le segment de dent respectif est de 360°/N,
- des dents (15) d'ouvertures de stratification successives (13) de la stratification respective (10) dans la direction circonférentielle de moteur (CM) sont décalées les unes par rapport aux autres avec un décalage d'ouverture par rapport à la direction circonférentielle de guide associée (CG), lequel décalage d'ouverture est de 360°/N,
- des dents (15) d'ouvertures de stratification axialement successives (13) du guide respectif (12) sont décalées par rapport à la direction circonférentielle de guide associée (CG) avec un décalage de stratification de 360°/N par les unes rapport aux autres.

10. Machine électrique selon la revendication 5 à 8,
**caractérisée en ce que**
- l'ouverture de stratification respective (13) présente au moins M dents (15), entre chacune desquelles un segment d'espace (17) est agencé, M valant au moins deux,
- la machine électrique (1) présente un nombre N de broches (11) qui sont espacées de manière équidistante les unes des autres dans la direction circonférentielle de moteur (CM),
- des dents (15) de l'ouverture de stratification respective (13) sont espacées les unes des autres dans la direction circonférentielle de guide associée (CG) avec un décalage de dents de 360°/M,
- des dents (15) des ouvertures de stratification (13) des ouvertures de stratification successives (13) de la stratification respective (10) dans la direction circonférentielle de moteur (CM) sont décalées les unes par rapport aux autres avec un décalage d'ouverture par rapport à la direction circonférentielle de guide associée (CG), lequel décalage d'ouverture est de 360°/2M,
- des dents (15) d'ouvertures de stratification axialement successives (13) du guide respectif (12) sont décalées les unes par rapport aux autres avec un décalage de stratification de 360°/N.

11. Machine électrique selon l'une quelconque des revendications 5 à 10,
**caractérisée en ce que**
les stratifications (10) du noyau stratifié (8) présentant des dents (15) sont formées comme des pièces identiques (24), les stratifications (10) axialement successives étant agencées en rotation les unes par rapport aux autres autour de la direction axiale de moteur (AM).

12. Procédé de fabrication d'une machine électrique (1) selon l'une quelconque des revendications précédentes,
- dans lequel un ensemble support (25) comprenant le support (4) et la au moins une broche (11) fixée au support (4) est prévu,
- dans lequel un ensemble stator (26) comprenant le stator (2) est au moins partiellement prévu,
- dans lequel un ensemble rotor (27) comprenant le rotor (3) est au moins partiellement prévu,
- dans lequel l'ensemble stator (26) est ajusté axialement par ajustement serré sur la au moins une broche (11) de l'ensemble support (25), de sorte que l'ensemble stator (26) soit positionné et fixé à l'ensemble support (25),
- dans lequel l'ensemble rotor (27) est fixé en rotation à l'ensemble support (25).

13. Procédé selon la revendication 12,
**caractérisé en ce que**
- le support (4) est fabriqué par moulage par injection,
- la au moins une broche (11) est insérée en tant qu'insert dans un moule d'injection et, ensuite, le support (4) est fabriqué par moulage par injection, de sorte que la au moins une broche (11) soit fixée au support (4) et fasse saillie axialement à partir du support (4).

14. Procédé selon la revendication 12 ou 13,
**caractérisé en ce que**
- un ensemble stator (26) présentant un noyau stratifié (8) selon l'une quelconque des revendications 4 à 12 est prévu,
- le noyau stratifié (8) est ajusté axialement par ajustement serré sur la au moins une broche (11) de l'ensemble support (25).
